# EUROPÄISCHE PATENTANMELDUNG

(11) **EP 1 518 625 A2**
(43) Veröffentlichungstag der Anmeldung: **30.03.2005**
(21) Anmeldenummer: 04022167.3
(22) Anmeldetag: 17.09.2004
(51) Int. Cl.: B23B 51/02, B28D 1/14

(54) **Bohrer mit sternförmigem Hartmetalleinsatz**

(30) Priorität: 24.09.2003 DE 20314813 U
(71) Anmelder: Berner GmbH, 74653 Künzelsau (DE)
(72) Erfinder: Runge, Erich, 74653 Künzelsau (DE)
(74) Vertreter: Sties, Jochen, Dipl.-Ing.

(57) **Zusammenfassung**

Bohrer mit einem Schaft (5), drei Hartmetall-Schneidplatten (10), die sternförmig am Vorderende des Schafts angebracht sind, wobei jede Schneidplatte auf ihren parallel zur Längsachse des Schafts verlaufenden Außenseiten (16) mit zwei Vorsprüngen (18) versehen ist.

## Beschreibung

Die Erfindung betrifft einen Bohrer mit Hartmetall-Schneidplatten, insbesondere einen Gesteinsbohrer.

Aus dem Stand der Technik sind die verschiedensten Gestaltungen von Hartmetall-Schneidplatten bekannt, mit denen eine möglichst hohe Bohrleistung erzielt werden soll.

Die Erfindung schafft einen Bohrer, dessen Schneidplatten sehr zuverlässig in einer Aufnahme im Schaft befestigt werden können, so daß sie auch hohen Belastungen problemlos standhalten können. Zu diesem Zweck sind bei einem Bohrer mit einem Schaft erfindungsgemäß drei Hartmetall-Schneidplatten vorgesehen, die sternförmig am Vorderende des Schafts angebracht sind, wobei jede Schneidplatte auf ihren parallel zur Längsachse des Schafts verlaufenden Außenseiten mit zwei Vorsprüngen versehen ist. Die beiden Vorsprünge dienen zur zuverlässigen Verankerung der Schneidplatten im Schaft.

Gemäß einer bevorzugten Ausführungsform der Erfindung weist jede Schneidplatte eine Schneidkante auf, die derart schräg zur Längsachse der Schneidplatte verläuft, daß ein radial weiter außenliegender Abschnitt, in der Drehrichtung des Bohrers betrachtet, weiter vorne liegt als ein radial weiter innenliegender Abschnitt. Diese Anordnung der Schneidkanten verbessert die Schneidleistung, da auf diese Weise verhindert wird, daß die Schneidkante einer Schneidplatte beim Schlagbohren in die von der Schneidkante der vorhergehenden Schneidplatte geschlagene Vertiefung im zu bohrenden Werkstoff trifft.

Gemäß einer bevorzugten Ausführungsform der Erfindung ist jede Schneidplatte an ihrem radial außenliegenden Ende mit einem Brechvorsprung versehen. Dieser Brechvorsprung verleiht dem Bohrer mehr "Aggressivität", führt also zu einer höheren Bohrleistung.

Gemäß der bevorzugten Ausführungsform der Erfindung ist der Bohrer mit einer Zentrierspitze versehen. Diese kann entweder einstückig mit den drei Schneidplatten ausgeführt sein, so daß ein sternförmiger Hartmetall-Einsatz gebildet ist, oder sie kann separat ausgeführt sein. In diesem Fall sind die Schneidplatten an ihrem radial innenliegenden Ende vorzugsweise derart abgerundet ausgeführt, daß sie sich optimal an die Zentrierspitze anschmiegen. Unabhängig von der konkreten Ausgestaltung können die Schneidplatten zusammen mit der Zentrierspitze in den Schaft des Bohrers eingelötet werden.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 einen Bohrer in einer Seitenansicht;
- Figur 2 eine Draufsicht auf das Vorderende des Bohrers von Figur 1;
- Figur 3 in einer Seitenansicht die Schneidplatten und die Zentrierspitze, die bei dem Bohrer von Figur 1 verwendet werden;
- Figur 4 eine Draufsicht auf die Schneidplatten und die Zentrierspitze von Figur 3;
- die Figuren 5 bis 8 verschiedene Seitenansichten einer Schneidplatte des Bohrers von Figur 1;
- Figur 9 eine Draufsicht auf die Schneidplatte der Figuren 5 bis 8;
- Figur 10 eine Seitenansicht von Schneidplatten und Zentrierspitze gemäß einer zweiten Ausführungsform;
- Figur 11 eine Draufsicht auf die Schneidplatten und die Zentrierspitze von Figur 10;
- die Figuren 12 bis 20 in Ansichten entsprechend denjenigen der Figuren 1 bis 9 einen Bohrer mit Schneidplatten und Zentrierspitze gemäß einer dritte Ausführungsform; und
- die Figuren 21 und 22 in Ansichten entsprechend denjenigen der Figuren 10 und 11 Schneidplatten mit Zentrierspitze gemäß einer vierten Ausführungsform.

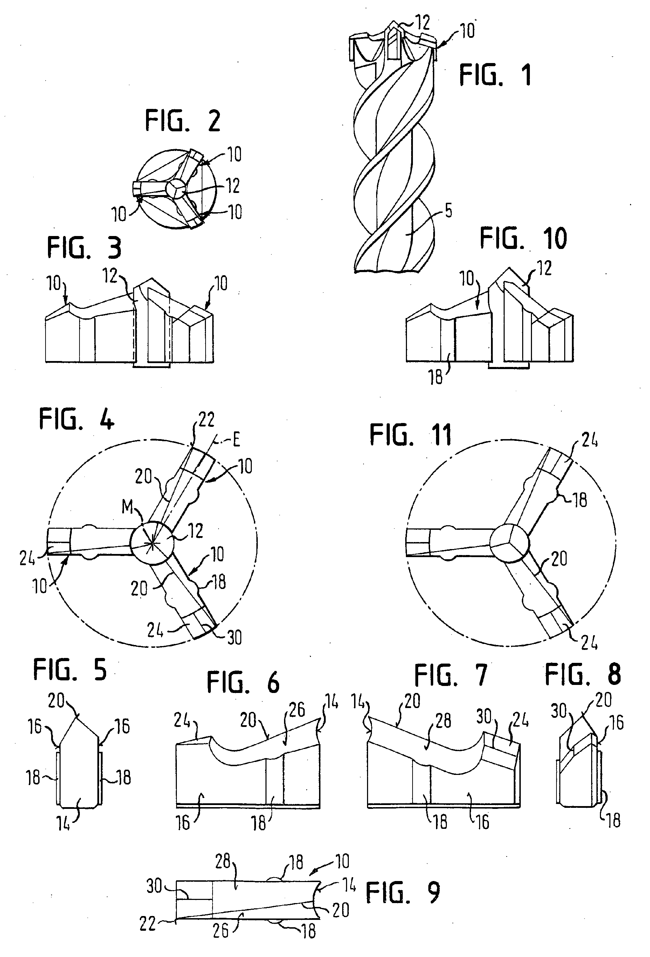

In den Figuren 1 und 2 ist ein Bohrer gezeigt, der einen Schaft 5 aufweist, der an seinem vorderen Ende mit drei Hartmetall-Schneidplatten und einer Zentrierspitze 12 versehen ist. Der Schaft ist mit drei Wendeln versehen, so daß Bohrmehl schnell abgeführt werden kann.

Die Zentrierspitze 12 ist stiftförmig mit rundem Querschnitt ausgeführt, wobei ihre Mittelachse mit der Mittelachse M des Schafts 5 des Bohrers zusammenfällt (siehe Figur 4). Die drei Schneidplatten 10 sind sternförmig angeordnet, also in einem Winkelabstand von jeweils 120°. An ihrem radial innenliegenden Ende sind die Schneidplatten 10 mit einer abgerundeten Fläche 14 versehen, deren Krümmungsradius mit dem Radius der Zentrierspitze 12 übereinstimmt; die Schneidplatten 10 schmiegen sich somit ohne Spalt an die Zentrierspitze 12 an.

Jede Schneidplatte 10 hat in der Draufsicht einen allgemein rechteckigen Querschnitt (siehe Figur 9), wobei auf ihren großen Außenflächen 16, also den Flächen, die parallel zur Mittelachse M verlaufen, jeweils ein kreisabschnittsförmiger Vorsprung 18 ausgebildet ist. Die beiden Vorsprünge 18 sind einander gegenüberliegend angeordnet (siehe Figur 9).

Jede Schneidplatte weist eine Schneidkante 20 auf, die schräg über die gesamte Länge der Schneidplatte verläuft. Die Schneidkante 20 verläuft in zur Längsachse M radialer Richtung, jedoch schräg zur Mittelebene E der Schneidplatte (siehe Figur 4). Dabei ist die Schneidkante 20 so ausgerichtet, daß sie auf die Ecke 22 der Schneidplatte 10 zuläuft, die in der Drehrichtung des Bohrers betrachtet vorne liegt.

An ihrem radial außenliegenden Ende ist jede Schneidplatte mit einem Brechvorsprung 24 versehen, der in axialer Richtung betrachtet gegenüber die nebenliegenden Bereiche der Schneidplatte hervorsteht. Die Schneidkante 20 erstreckt sich bis auf den Brechvorsprung 24. Die maximale Höhe des Brechvorsprungs 24 liegt dabei jedoch unterhalb der maximalen Höhe der Schneidplatte am radial innenliegenden Ende.

Insgesamt betrachtet hat die in axialer Richtung vorne liegende Seite jeder Schneidplatte folgenden Verlauf: Ausgehend von dem radial innenliegenden Ende senken sich die durch die Schneidkante 20 gebildete Spanfläche 26 und die Freifläche 28 zunächst ab, wobei sie in diesem Bereich jeweils eben sind. Nach etwa der Hälfte der Länge der Schneidplatte beginnt ein abgerundeter Übergang, so daß die Freifläche und die Spanfläche wieder ansteigen. Am radial außenliegenden Ende befindet sich dann der Brechvorsprung 24, auf dem wiederum die Spanfläche und die Freifläche nach außen hin abfallen. Die Freifläche 28 auf dem Brechvorsprung 24 ist in zwei Abschnitten ausgeführt, nämlich einem ersten Abschnitt, der an die Schneidkante 20 angrenzt und in einem ersten Winkel nach außen hin abfällt, und einen zweiten Abschnitt, der sich an den ersten Abschnitt anschließt und steiler abfällt als der erste Abschnitt. Der Übergang zwischen diesen beiden Abschnitten ist in den Figuren mit dem Bezugszeichen 30 versehen.

Die drei Schneidplatten 10 sind zusammen mit der Zentrierspitze 12 in das vordere Ende des Bohrers eingelötet. Durch die Vorsprünge 18 ergibt sich ein sehr guter mechanischer Halt.

In den Figuren 10 und 11 ist eine zweite Ausführungsform gezeigt. Hinsichtlich der Geometrie entsprechen die Schneidplatten 10 und die Zentrierspitze 20 der in den Figuren 3 bis 9 gezeigten Ausführungsform. Der einzige Unterschied besteht darin, daß die Zentrierspitze 12 einstückig mit den drei Schneidplatten 10 ausgeführt ist, so daß sich ein einteiliger, sternförmiger Hartmetall-Schneideinsatz ergibt, der in die Spitze des Bohrers eingelötet wird.

Die erste und die zweite Ausführungsform zeichnen sich durch eine besonders gute Zentrierwirkung aus. Selbst für den Fall, daß die Zentrierspitze 12 nicht greift oder bereits so weit verschlissen ist, daß ihre Zentrierwirkung unzureichend ist, wird der Bohrer durch die erhöhten, radial innenliegenden Abschnitte der Schneidplatten 10 zuverlässig zentriert. Diese Abschnitte laufen nämlich kegelförmig zur Mitte hin zusammen, so daß sie wie eine große, dreiflüglige Zentrierspitze wirken.

Die Brechvorsprünge 24 sorgen für eine sehr gute Schneidleistung des Bohrers, wobei sich eine gute Haltbarkeit ergibt. Die in unterschiedlichen Neigungen ausgeführte Freifläche der Brechvorsprünge sorgt nämlich für eine hohe mechanische Festigkeit.

Auch die spezielle Ausrichtung der Schneidkante 20 schräg zur Mittelebene E der Schneidplatten 10 sorgt für eine gute Schneidleistung, da verhindert ist, daß die Schneidkante einer nachfolgenden Schneidplatte in die Schlagmarken der Schneidkante der vorhergehenden Schneidplatte treffen.

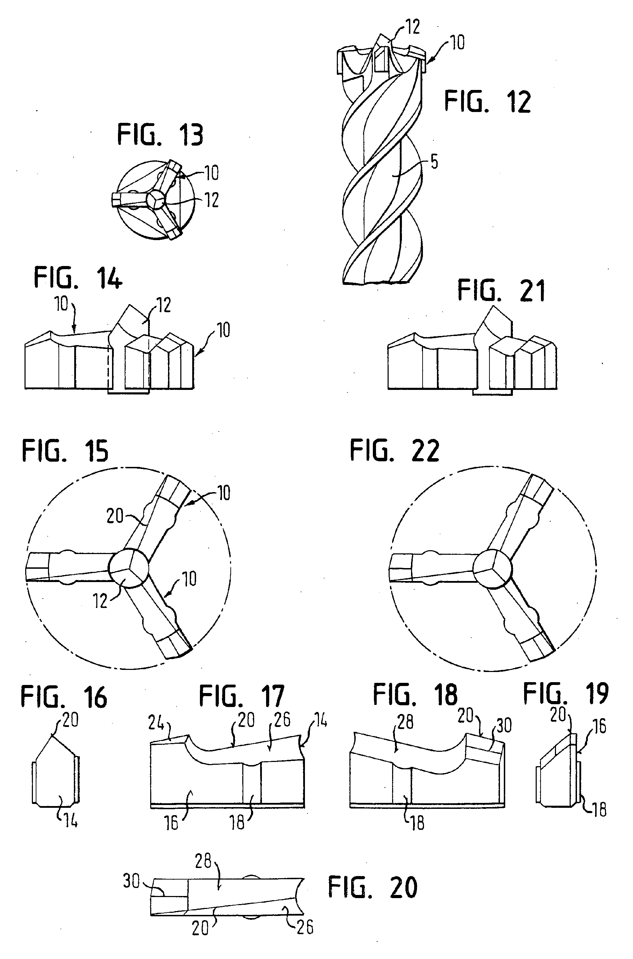

In den Figuren 12 bis 20 ist ein Bohrer mit Schneidplatten und Zentrierspitze gemäß einer dritten Ausführungsform gezeigt. Für die von der ersten Ausführungsform bekannten Elemente werden dieselben Bezugszeichen verwendet, und es wird insoweit auf die obigen Erläuterungen verwiesen.

Der einzige Unterschied zwischen der ersten und der dritten Ausführungsform besteht darin, daß das radial innenliegende Ende jeder Schneidplatte 10 sich auf derselben Höhe befindet wie der radial innenliegende Abschnitt jedes Brechvorsprungs 24. Anders ausgedrückt fallen die Freifläche und die Spanfläche 26, 28 jeder Schneidplatte beginnend am radial innenliegenden Ende zunächst ab, um dann nach Durchlaufen des Übergangs wieder auf dieselbe Höhe anzusteigen. Von dieser Höhe fallen die beiden Flächen dann wieder radial als Spanfläche und Freifläche des Brechvorsprungs 24 nach außen hin ab.

In den Figuren 21 und 22 ist eine vierte Ausführungsform gezeigt. Diese unterscheidet sich von der Ausführungsform gemäß den Figuren 14 bis 20 dadurch, daß die Schneidplatten 10 und die Zentrierspitze 12 einstückig miteinander ausgeführt sind, wie dies bereits von der Ausführungsform gemäß den Figuren 10 und 11 bekannt ist.

## Patentansprüche

1. Bohrer mit einem Schaft (5), drei Hartmetall-Schneidplatten (10), die sternförmig am Vorderende des Schafts angebracht sind, wobei jede Schneidplatte auf ihren parallel zur Längsachse des Schafts verlaufenden Außenseiten (16) mit zwei Vorsprüngen (18) versehen ist.

2. Bohrer nach Anspruch 1, **dadurch gekennzeichnet, daß** sich die Vorsprünge (18) über die gesamte Höhe jeder Schneidplatte (10) erstrecken.

3. Bohrer nach Anspruch 1 oder Anspruch 2, **dadurch gekennzeichnet, daß** die Vorsprünge (18) einander gegenüberliegend angeordnet sind.

4. Bohrer nach einem der vorhergehenden Ansprüche, **dadurch gekennzeichnet, daß** die Vorsprünge (18), in einem Schnitt senkrecht zur Längsachse des Schafts betrachtet, den Querschnitt eines Kreisabschnitts haben.

5. Bohrer nach einem der vorhergehenden Ansprüche, **dadurch gekennzeichnet, daß** jede Schneidplatte (10) eine Schneidkante (20) aufweist.

6. Bohrer nach Anspruch 5, **dadurch gekennzeichnet, daß** die Schneidkante (20) derart schräg zur Längsachse der Schneidplatte (10) verläuft, daß ein radial weiter außen liegenden Abschnitt, in der Drehrichtung des Bohrers betrachtet, weiter vorne liegt als ein radial weiter innen liegenden Abschnitt.

7. Bohrer nach Anspruch 5 oder Anspruch 6, **dadurch gekennzeichnet, daß** die Schneidkante (20) radial verläuft.

8. Bohrer nach einem der vorhergehenden Ansprüche, **dadurch gekennzeichnet, daß** jede Schneidplatte (10) an ihrem radial außenliegenden Ende mit einem Brechvorsprung (24) versehen ist.

9. Bohrer nach Anspruch 8, **dadurch gekennzeichnet, daß** der Brechvorsprung (24) mit einer Schneidkante (20) versehen ist.

10. Bohrer nach Anspruch 8 oder Anspruch 9, **dadurch gekennzeichnet, daß** die Freifläche (28) des Brechvorsprungs (24) aus einem ersten Abschnitt und einem zweiten Abschnitt besteht, wobei der zweite Abschnitt steiler von der Brechkante weg abfällt als der erste Abschnitt.

11. Bohrer nach einem der Ansprüche 8 bis 10, **dadurch gekennzeichnet, daß** die Schneidkante (20) über die gesamte Schneidplatte (10) einschließlich des Brechvorsprungs (24) verläuft.

12. Bohrer nach einem der Ansprüche 8 bis 11, **dadurch gekennzeichnet, daß** die Freifläche (28) radial innerhalb des Brechvorsprungs eben ist bis zu einem Punkt, an dem ein Übergang zum Brechvorsprung beginnt.

13. Bohrer nach einem der vorhergehenden Ansprüche, **dadurch gekennzeichnet, daß** eine Zentrierspitze (12) vorgesehen ist.

14. Bohrer nach Anspruch 13, **dadurch gekennzeichnet, daß** die Zentrierspitze (12) einstückig mit den drei Schneidplatten (10) ausgeführt ist.

15. Bohrer nach Anspruch 13 **dadurch gekennzeichnet, daß** die Zentrierspitze (12) als separates Teil ausgeführt ist und daß die drei Schneidplatten (10) an ihrem radial innenliegenden Ende abgerundet ausgeführt sind mit einem Radius, der dem Radius der Zentrierspitze (12) entspricht.

16. Bohrer nach einem der vorhergehenden Ansprüche, **dadurch gekennzeichnet, daß** das radial innenliegende Ende der Schneidplatte (10) sich auf derselben Höhe befindet wie das radial außenliegende Ende.

17. Bohrer nach einem der Ansprüche 1 bis 15, **dadurch gekennzeichnet, daß** das radial innenliegende Ende der Schneidplatte (10) deutlich höher liegt als das radial außenliegende Ende der Schneidplatte (10).

18. Bohrer nach einem der vorhergehenden Ansprüche, **dadurch gekennzeichnet, daß** die Schneidplatten (10) in den Schaft (5) eingelötet sind.
